# EUROPÄISCHE PATENTANMELDUNG

(11) **EP 2 093 446 A2**
(43) Veröffentlichungstag der Anmeldung: **26.08.2009**
(21) Anmeldenummer: 09153191.3
(22) Anmeldetag: 19.02.2009
(51) Int. Cl.: F16D 13/68, B60K 6/40, B60K 6/26

(54) **Antriebsstrang eines Motorsportfahrzeugs**

(30) Priorität: 23.02.2008 DE 102008010900; 14.01.2009 DE 102009000207
(71) Anmelder: ZF Friedrichshafen AG, 88038 Friedrichshafen (DE)
(72) Erfinder: Wittholz, Jan, 97506 Grafenrheinfeld (DE)

(57) **Zusammenfassung**

Die Erfindung betrifft einen Antriebsstrang eines Motorsportfahrzeugs, der eine Kupplung (1) aufweist, die einen Kupplungskorb (2) umfasst, wobei der Kupplungskorb (2) eine Anzahl sich in Richtung seiner Drehachse (3) erstreckende stabförmige Elemente (4) aufweist. Um das Fahrzeug in kompakter und leichter Bauweise auch als Hybridfahrzeug betreiben zu können, sieht die Erfindung vor, dass die stabförmigen Elemente (4) in ihren beiden axialen Enden (5, 6) über zwei ring- oder scheibenförmige Abschlusselemente (7, 8) mechanisch und elektrisch leitend verbunden sind, wobei der Kupplungskorb (2) von einem Stator (9) koaxial zur Drehachse (3) umgeben ist.

## Beschreibung

Die Erfindung betrifft einen Antriebsstrang eines Motorsportfahrzeugs, der eine Kupplung aufweist, die einen Kupplungskorb umfasst, wobei der Kupplungskorb eine Anzahl sich in Richtung seiner Drehachse erstreckende stabförmige Elemente aufweist.

Allgemein bekannt ist es, dass Fahrzeuge mit Hybridantrieben versehen werden, d. h. sie erhalten neben dem klassischen Verbrennungsmotor noch einen Elektromotor, um mittels einer Batterie auch ohne Betrieb des Verbrennungsmotors fahren zu können. Gleichermaßen ist es bekannt, beide Antriebsarten zu kombinieren, d. h. den Verbrennungsmotor und den Elektromotor gleichzeitig zu betreiben.

Auch im Motorsport kann ein solches Konzept sinnvoll sein. Hier allerdings stellt sich das Problem, dass eine besonders platzsparende Unterbringung des Elektromotors erforderlich ist, da die Platzverhältnisse hier zumeist noch wesentlich beengter sind als bei Serienfahrzeugen. Namentlich ist der radiale Bauraum zumeist stark begrenzt.

Ein anderes Problem ist es, dass das Massenträgheitsmoment des Antriebsstranges eines Motorsportfahrzeugs möglichst gering sein muss, um eine hohe Dynamik des Fahrzeugs zu erreichen. Demgemäß ist es in der Regel nicht akzeptabel, zusätzliche Elemente, wie einen Elektromotor, in den Antriebsstrang zu integrieren, da dies dem genannten Ziel einer hohen Fahrdynamik zuwider laufen würde.

Entsprechendes gilt auch mit Blick auf das Gewicht des Fahrzeugs und damit auch des Antriebsstranges, das möglichst gering sein muss. Die Integration eines Elektromotors würde hier kontraproduktiv wirken.

Der Erfindung liegt die **Aufgabe** zugrunde, einen Antriebsstrang der eingangs genannten Art so fortzubilden, dass es möglich wird, einen Elektromotor für einen hybriden Antrieb in ihn zu integrieren, ohne dass sich der benötigte Bauraum, insbesondere der radiale Bauraum, wesentlich erhöht und ohne, dass sich das Massenträgheitsmoment des Antriebsstrangs erhöht. Ferner soll der zu integrierende Elektromotor möglichst leicht sein.

Die **Lösung** dieser Aufgabe durch die Erfindung ist **dadurch gekennzeichnet, dass** die stabförmigen Elemente des Kupplungskorbes in ihren beiden axialen Enden über zwei ring- oder scheibenförmige Abschlusselemente mechanisch und elektrisch leitend verbunden sind, wobei der Kupplungskorb von einem Stator koaxial zur Drehachse umgeben ist.

Gemäß der Erfindung wird also der Kupplungskorb der Kupplung, der als solcher üblicherweise verwendet wird, so umfunktioniert, dass er gleichzeitig als Rotor eines Elektromotors fungiert. Er wird wie angegeben ausgestaltet und von einem Stator koaxial umgeben.

Der Stator und der Kupplungskorb bilden demgemäß einen Elektromotor, vorzugsweise einen elektrischen Asynchronmotor. Der Asynchronmotor kann - wie an sich üblich - einen Frequenzumrichter umfassen.

Der Stator hat vorzugsweise drei Paar elektrische Wicklungen. Der Kupplungskorb hat mit Vorteil zwischen acht und zwölf stabförmige Elemente; diese sind zumeist äquidistant um den Umfang des Kupplungskorbs verteilt angeordnet.

Wenngleich im Rennsport üblicherweise Titan als Material für den Kupplungskorb verwendet wird, ist es von Vorteil, wenn die stabförmigen Elemente aus Stahl bestehen. Auch die ring- oder scheibenförmigen Abschlusselemente können aus Stahl bestehen. Damit wird eine bessere elektrische Leitfähigkeit erreicht, auf die es vorliegend ankommt.

Eines der ring- oder scheibenförmigen Abschlusselemente und die stabförmigen Elemente können einstückig ausgebildet sein. Das andere ring- oder scheibenförmige Abschlusselement und die stabförmigen Elemente können miteinander verschraubt sein.

Der Erfindungsvorschlag kommt vor allem bei einem Rennwagen zum Einsatz, worunter auch ein Formel-1-Wagen zu verstehen sein kann.

Durch die vorgeschlagene Konstruktion wird es möglich, einen Elektromotor zwecks Hybridantrieb in ein Motorsportfahrzeug zu integrieren, ohne dass das Massenträgheitsmoment des Antriebsstranges erhöht wird. Auch das für den Elektromotor erforderliche zusätzliche Gewicht bleibt in untergeordneten Bereichen, da der Kupplungskorb den Rotor des Elektromotors darstellt und insofern überhaupt kein Zusatzgewicht bedingt ist. Nur der Stator kommt additiv hinzu.

Durch den vorgeschlagenen Aufbau ist auch der Platzbedarf gering; es wird lediglich der radial relativ schmal bauende Stator erforderlich.

### In der Zeichnung ist ein Ausführungsbeispiel der Erfindung dargestellt. Es zeigen:

- Fig. 1: eine perspektivische Darstellung eines Kupplungskorbes einer Kupplung eines Rennsportfahrzeugs und
- Fig. 2: die Ansicht eines alternativ ausgebildeten Kupplungskorbes samt einem diesen koaxial umgebenden Stator, gesehen in Achsrichtung.

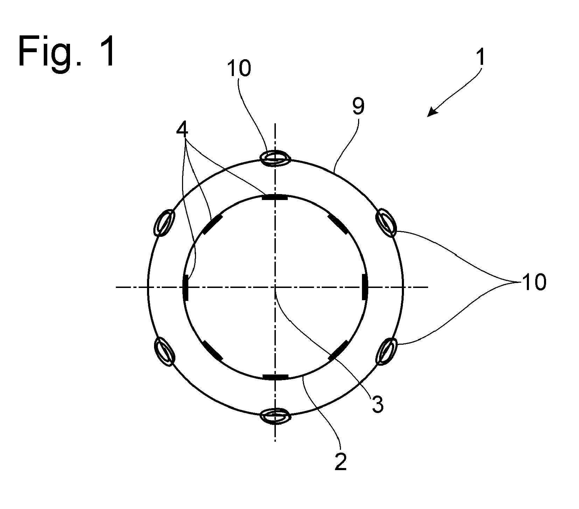

In Fig. 1 ist der schematische Aufbau eines Elektromotors zu sehen, wie er erfindungsgemäß zum Einsatz kommt, um ein Motorsportfahrzeug für den Hybridantrieb auszustatten. Schematisch dargestellt ist eine Kupplung 1, gesehen in Richtung der Drehachse 3 derselben, die aus einem drehbar gelagerten Kupplungskorb 2 mit Fußgehäuse besteht, der koaxial zur Drehachse 3 von einem Stator 9 umgeben ist.

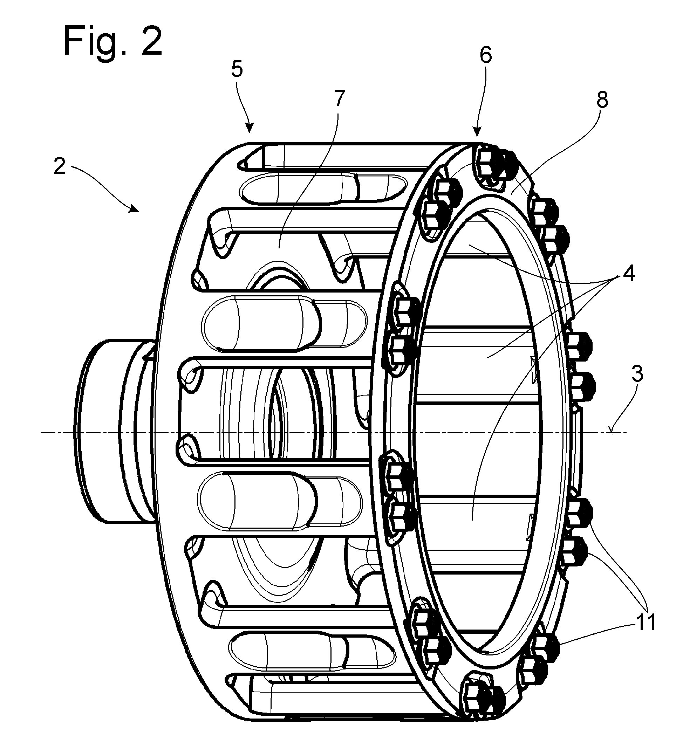

Wie in der Zusammenschau mit Fig. 2 zu erkennen ist (die einen Kupplungskorb 2 in einer etwas anderen Ausgestaltung zeigt), hat der Kupplungskorb 2 eine Anzahl stabförmiger Elemente 4, die sich in Richtung der Drehachse 3 erstrecken.

In den axialen Enden 5 bzw. 6 des Kupplungskorbes 2 ist je ein ring- oder scheibenförmiges Abschlusselement 7 bzw. 8 angeordnet. Wesentlich ist, dass die ring- oder scheibenförmigen Abschlusselemente 7, 8 zusammen mit den stabförmigen Elementen 4 eine mechanisch feste und elektrisch leitende Verbindung bilden. Dies ist erforderlich um den Kupplungskorb 2 als Rotor des Elektromotors tauglich zu machen. Hierzu sind im Ausführungsbeispiel gemäß Fig. 2 das eine scheibenförmige Abschlusselement 7 und die stabförmigen Elemente 4 einstückig ausgeführt, d. h. vorliegend aus einem Stahlrohling durch Fräsen gearbeitet. Das ringförmige Abschlusselement 8 ist an die rechten Stirnseiten der stabförmigen Elemente 4 angesetzt und mittels Schrauben 11 fixiert.

Koaxial zur Drehachse 3 umgeben ist der Rotor 2, d. h. der Kupplungskorb, von dem Stator 9. Um den Umfang des Stators 9 herum sind insgesamt drei Paare elektrischer Wicklungen 10 (Spulenpaare) angeordnet.

Die dargestellte Anordnung gemäß Fig. 1 arbeitet als Asynchronmotor mit Frequenzumrichter, wie er als elektrischer Antrieb hinlänglich bekannt ist. Der Stator 9 dieses Asynchronmotors besteht also aus 3 Paaren Wicklungen, die mit je einer der drei Phasen des Drehstroms gespeist werden. Der Rotor 4 besteht indes nur aus den elektrisch leitenden Stäben 4, die parallel zur Drehachse 3 des Motors bzw. der Kupplung 1 auf einem definierten Durchmesser angeordnet sind und die an ihren Enden miteinander elektrisch und mechanisch verbunden sind. Das vom Stator 9 erzeugte Drehfeld induziert bei der Überholung des Rotors in den Stäben 4 einen Strom, der wiederum ein Stator-eigenes Magnetfeld erzeugt. Diese beiden Magnetfelder sorgen zusammen für das Antriebsmoment.

Das so ausgestatte Fahrzeug kann mithin im Hybridbetrieb betrieben werden.

Der Kupplungskorb 2 ist in dieser oder ähnlicher Form ein ohnehin vorhandenes Bauteil und kann in seiner Form ohne Änderungen für den genannten Einsatz genutzt werden, einschließlich der benötigten Lagerung, die ebenfalls schon vorhanden ist.

Da bei der Kupplung im Rennsport zumeist ein Reibpaket aus Carbon zum Einsatz kommt, das nicht elektrisch leitend ist, wird die angestrebte Funktion des Rotors hierdurch nicht gestört.

Der Wirkungsgrad des Rotors wird bei Verwendung von Stahl statt Titan wegen der besseren Leitfähigkeit von Stahl verbessert.

Nur der Stator muss bei der Realisierung des Erfindungsvorschlags zusätzlich im Fahrzeug untergebracht werden. Allerdings erhöht er das Massenträgheitsmoment des Antriebsstranges nicht.

### Bezugszeichenliste

- 1: Kupplung
- 2: Kupplungskorb
- 3: Drehachse
- 4: stabförmiges Element
- 5: axiales Ende
- 6: axiales Ende
- 7: ring- oder scheibenförmiges Abschlusselement
- 8: ring- oder scheibenförmiges Abschlusselement
- 9: Stator
- 10: elektrische Wicklung
- 11: Schraube

## Patentansprüche

1. Antriebsstrang eines Motorsportfahrzeugs, der eine Kupplung (1) aufweist, die einen Kupplungskorb (2) umfasst, wobei der Kupplungskorb (2) eine Anzahl sich in Richtung seiner Drehachse (3) erstreckende stabförmige Elemente (4)
aufweist,
**dadurch gekennzeichnet,**
**dass** die stabförmigen Elemente (4) in ihren beiden axialen Enden (5, 6) über zwei ring- oder scheibenförmige Abschlusselemente (7, 8) mechanisch und elektrisch leitend verbunden sind, wobei der Kupplungskorb (2) von einem Stator (9) koaxial zur Drehachse (3) umgeben ist.

2. Antriebsstrang nach Anspruch 1, **dadurch gekennzeichnet, dass** der Stator (9) und der Kupplungskorb (2) einen elektrischen Asynchronmotor bilden.

3. Antriebsstrang nach Anspruch 2, **dadurch gekennzeichnet, dass** der Asynchronmotor einen Frequenzumrichter umfasst.

4. Antriebsstrang nach einem der Ansprüche 1 bis 3, **dadurch gekennzeichnet, dass** der Stator (9) drei Paar elektrische Wicklungen (10) hat.

5. Antriebsstrang nach einem der Ansprüche 1 bis 4, **dadurch gekennzeichnet, dass** der Kupplungskorb (2) zwischen 8 und 12 stabförmigen Elemente (4) aufweist.

6. Antriebsstrang nach Anspruch 5, **dadurch gekennzeichnet, dass** die stabförmigen Elemente (4) äquidistant um den Umfang des Kupplungskorbs (2) verteilt angeordnet sind.

7. Antriebsstrang nach einem der Ansprüche 1 bis 6, **dadurch gekennzeichnet, dass** die stabförmigen Elemente (4) aus Stahl bestehen.

8. Antriebsstrang nach einem der Ansprüche 1 bis 7, **dadurch gekennzeichnet, dass** die ring- oder scheibenförmigen Abschlusselemente (7, 8) aus Stahl bestehen.

9. Antriebsstrang nach einem der Ansprüche 1 bis 8, **dadurch gekennzeichnet, dass** das eine ring- oder scheibenförmige Abschlusselement (7) und die stabförmigen Elemente (4) einstückig ausgebildet sind.

10. Antriebsstrang nach Anspruch 9, **dadurch gekennzeichnet, dass** das andere ring- oder scheibenförmige Abschlusselement (8) und die stabförmigen Elemente (4) miteinander verschraubt (11) sind.

11. Antriebsstrang nach einem der Ansprüche 1 bis 10, **dadurch gekennzeichnet, dass** er Bestandteil eines Rennwagens, insbesondere eines Formel-1-Wagens, ist.
